# EUROPÄISCHE PATENTSCHRIFT

(11) **EP 1 617 726 B1**
(45) Veröffentlichungstag und Bekanntmachung des Hinweises auf die Patenterteilung: **28.02.2007**
(21) Anmeldenummer: 04729100.0
(22) Anmeldetag: 23.04.2004
(51) Int. Cl.: A22C 11/12

(54) **ELLIPTISCHER ZAHNRIEMENTRIEB**
ELLIPTICAL SYNCHRONOUS BELT DRIVE
ENTRAINEMENT PAR COURROIE CRANTEE ELLIPTIQUE

(30) Priorität: 23.04.2003 DE 10318377; 19.12.2003 DE 20319755 U
(43) Veröffentlichungstag der Anmeldung: 25.01.2006
(73) Patentinhaber: Poly-clip System GmbH & Co. KG, 60489 Frankfurt am Main (DE)
(72) Erfinder: EBERT, Detlef, 61231 Bad Nauheim (DE); PRETSCHER, Thomas, 63165 Mühlheim (DE)
(74) Vertreter: Achler, Matthias
(86) Internationale Anmeldenummer: PCT/EP2004/004329
(87) Internationale Veröffentlichungsnummer: WO 2004/093553

(56) Entgegenhaltungen:
- DE-A- 1 586 210
- DE-A- 2 730 603
- DE-A- 19 601 720
- DE-A- 19 644 074

## Beschreibung

Die Erfindung betrifft eine Vorrichtung zum Verschließen einer mit Füllgut, insbesondere Wurstbrät, gefüllten, schlauch- oder beutelartigen Verpackungshülle mit Mitteln zum Einschnüren der Verpackungshülle und Bilden eines füllgutfreien Zopfabschnitts, mit Verschlussmitteln zum Setzen und Verschließen wenigstens einer Verschlussklammer um den Zopfabschnitt und mit einem Antrieb für die Mittel zum Einschnüren und für die Verschlussmittel.

Will man beispielsweise Wurstbrät, Kitt- oder Dichtmassen in (einseitig verschlossene) Folienschläuche oder Beutel verpacken, dann geschieht dies in bekannter Weise dadurch, dass die schlauch- oder beutelartige Verpackungshülle von einer Füllmaschine mit Füllgut befüllt wird. Die Füllmaschine gibt am Ende des Füllvorgangs oder kurz davor einen Synchronisationsimpuls aus, mit dem der Verschließvorgang mittels der eingangs beschriebenen Vorrichtung ausgelöst wird. Dieser beginnt damit, dass die gefüllte Verpackungshülle in einem ersten Arbeitstakt durch Schließen der Mittel zum Einschnüren der Verpackungshülle, z. B. zweier Verdrängerscherenpaare, in radialer Richtung bezüglich der Zentrumsachse der Verpackungshülle zu einem kurzen Zopf eingeschnürt wird (Verdrängen). Anschließend werden in einem zweiten Arbeitstakt die beiden Verdrängerscherenpaare in axialer Richtung, d.h. in Längsrichtung der Verpackungshülle, auseinander bewegt (Spreizen), wodurch dort befindliches Füllgut verdrängt wird, so dass zwischen den beiden Verdrängerscherenpaaren ein füllgutfreier Zopfabschnitt gewünschter Länge entsteht. Daraufhin wird in einem dritten Arbeitstakt eine in die Bahn eines Stempels - dieser ist Teil der Verschlussmittel - eingeführte Verschlussklammer (Clip) im Bereich des Zopfabschnitts auf die Verpackungshülle gesetzt und zwischen dem Stempel und einer Matrize - diese ist ebenfalls Teil der Verschlussmittel - so verformt, dass sie sich um den Zopfabschnitt legt und diesen verschließt. Bei einer Anordnung zweier Stempel und Matrizen kann der Zopfabschnitt von zwei in axialer Richtung nebeneinanderliegend angeordneten Verschlussklammern verschlossen und in demselben Arbeitsgang gegebenenfalls zwischen diesen beiden Verschlussklammern durchtrennt werden. Nach dem Verschließvorgang werden die Mittel zum Einschnüren und die Verschlussmittel in einem vierten Arbeitsgang in ihre Ausgangslage zurückbewegt und ein neuer Arbeitszyklus kann mit dem Füllvorgang beginnen.

Die Mittel zum Einschnüren und die Verschlussmittel sind durch einen Antrieb beispielsweise bestehend aus einem Elektromotor und einem nachgeschalteten Getriebe dergestalt angetrieben, dass deren Bewegungen durch Abtriebswellen des Getriebes und zugeordnete Kurvenscheiben miteinander gekoppelt sind. Die Steuerkurven der Kurvenscheiben lassen die Bewegungen der Mittel zum Einschnüren und der Verschlussmittel mit dem gewünschten Zeitablauf erfolgen. Eine Umdrehung der Kurvenscheiben resultiert demzufolge in einem Arbeitszyklus.

In der DE 196 01 720 A1 ist das Problem adressiert, dass das Öffnen der Verdrängerscheren, insbesondere bei Würsten mit größerem Durchmesser, nicht lange genug dauert, um eine ausreichende Menge Füllgut in die Verpackungshülle einzufüllen. Daher wird vorgeschlagen, eine nichtkonstante Antriebsgeschwindigkeit beispielsweise durch einen frei steuerbaren Drehstromservoantrieb als Teil des Antriebs vorzusehen, um einen vorteilhaften Scherenöffnungsverlauf zu erzielen. Die zeitlichen Abläufe ergeben sich demgemäß durch eine Überlagerung der nichtkonstanten Antriebsgeschwindigkeitskurve mit den Steuerkurven der Kurvenscheiben. Die Motordrehzahl wird gemäß dieser Druckschrift so gesteuert, dass die Verdrängerscheren bei langsamer Antriebsgeschwindigkeit lange geöffnet bleiben, was das Einfüllen des Füllgutes erleichtert, und die übrigen Bewegungsphasen so beschleunigt werden, dass die langen Öffnungszeiten der Verdrängerscheren kompensiert werden und die Dauer eines Arbeitszyklus auch bei Würsten mit großem Durchmesser nicht verlängert zu werden braucht.

Aus der EP 0 935 421 B1 ist weiterhin bekannt, die starre Kopplung der Bewegungen der Verdrängerscherenpaare und der Cliphebel dadurch aufzuheben, dass die einzelnen Arbeitszyklen des Verschließens, nämlich das Verdrängen, das Spreizen, das Setzen und Schließen der Verschlussklammer, zumindest teilweise unabhängig voneinander gesteuert werden. Dadurch können die Bewegungsabläufe an das jeweilige Produkt angepasst werden. Es besteht insbesondere die Möglichkeit, den Spreizvorgang bei zäh-pastösem Füllgut langsamer, das Setzen und Verschließen der Verschlussklammer aber schneller ablaufen zu lassen und auf diese Weise die Produktivität bei der Herstellung solcher Würste zu steigern. Gemäß dieser Lösung werden Elektromotoren durch eine programmierbare Steuereinheit als Teil des Antriebs dergestalt angesteuert, dass die Drehzahl je nach der gewünschten Arbeitsgeschwindigkeit für jeden Arbeitstakt innerhalb eines Zyklus' verändert wird.

Vorrichtungen mit einem solchen Antrieb brauchen aber verhältnismäßig viel Energie, insbesondere bedingt durch periodisches Anlaufen und Abbremsen der Vorrichtung.

Aus der DE 42 41 231 ist ein Umschlingungsgetriebe mit periodisch veränderlicher Übersetzung, insbesondere ein Zahnriemengetriebe bekannt, welches in solchen Fällen eingesetzt wird, in denen das Verhältnis der Winkelgeschwindigkeiten bzw. das Verhältnis der Drehmomente von An- und Abtriebeswelle einen veränderlichen Wert besitzen soll. Mittels eines solchen Getriebes lässt sich beispielsweise der Leistungsbedarf eines Antriebs vergleichmäßigen, wenn die getriebene Maschine nur während eines Teils der Umdrehung einen hohen Drehmomentbedarf besitzt. Ein anderer Anwendungsfall besteht darin, die Geschwindigkeit einer Bewegung für einen Teil der Umdrehung zu verlangsamen, um einen Arbeitstakt präziser ausführen zu können.

Das Dokument DE 19601720 beschreibt eine Vorrichtung zum Verschließen einer Verpackungshülle, wobei der Antrieb für die Mittel zum Einschnüren ein ungleichförmig übersetzendes Getriebe aufweist, das eine gleichförmige Antriebsbewegung in eine periodische, ungleichförmige Abtriebsbewegung übersetzt.

Aufgabe der vorliegenden Erfindung ist es, eine Vorrichtung zum Verschließen bereitzustellen, deren Antrieb besser auf den gewünschten Prozessablauf angepasst ist und zugleich weniger Energie benötigt.

Diese Aufgabe wird bei einer Vorrichtung der eingangs genannten Art dadurch gelöst, dass der Antrieb ein ungleichförmig übersetzendes Getriebe aufweist, das eine gleichförmige Antriebsbewegung in eine periodische, ungleichförmige Abtriebsbewegung übersetzt, wobei die Übersetzung des Getriebes derart ausgestaltet ist, dass die Abtriebsgeschwindigkeit beim Setzen der Verschlussmittel gegenüber der Abtriebsgeschwindigkeit beim Einschnüren und Verdrängen verringert ist, und wobei das Getriebe ein Zahnriemengetriebe oder ein Kettengetriebe mit wenigstens einen elliptischen Zahnrad oder mit wenigstens einen Zahnrad ist, exzentrisch gelagert ist.

In die Erfindung fließt die Erkenntnis ein, dass der Drehmomentbedarf innerhalb eines Arbeitszyklus sehr unterschiedlich ist. Bei den Arbeitstakten, die eine geringere Arbeitsgeschwindigkeit - also eine geringere Rotationsgeschwindigkeit der Abtriebswelle des Getriebes (Abtriebsgeschwindigkeit) - fordern, ist nämlich meist auch der Drehmomentbedarf an dieser Abtriebswelle erhöht. Zum Beispiel erfolgt bei zäh-pastösem Füllgut das Verdrängen und Spreizen langsam, es erfordert zugleich jedoch die meiste (lineare) Kraft, d.h. das größte Abtriebsmoment. Entsprechend ist in Fällen, in denen das Setzen und Verschließen des Clips langsamer vonstatten geht, beispielweise bei Füllgut mit niedriger Viskosität, dieser Prozess derjenige, der am meisten Kraft und somit Abtriebsmoment erfordert. Des weiteren fließt in die Erfindung die Erkenntnis ein, dass der Drehmomentbedarf und der hierzu umgekehrt proportionale Verlauf der geforderten Arbeitsgeschwindigkeit periodisch bei jedem Arbeitszyklus, d.h. nach jeder Umdrehung der Kurvenscheibe wiederkehren. Durch die Verwendung einer ungleichförmigen Übersetzung verläuft die Antriebsgeschwindigkeit innerhalb eines Zyklus periodisch und umgekehrt proportional zum Antriebsdrehmoment. Der Lieferzyklus des Antriebs mit einem periodisch ungleichförmig übersetzenden Getriebe ist daher auf den Abnahmezyklus, d.h. den gewünschten Prozessablauf mit periodisch wiederkehrenden Arbeitstakten ungleichförmiger Arbeitsgeschwindigkeit bzw. ungleichförmigen Drehmomentbedarfs in idealer Weise angepasst.

Da die Dimensionierung des Antriebsmotors nach dem Drehmomentbedarfsmaximum ausgelegt werden muss, hat die erfindungsgemäße Vorrichtung somit den Vorteil, dass anders als beim dem Stand der Technik der Drehmomentbedarf im Bereich der Spitzen, d.h. während der langsamen Bewegungsphase, antriebsseitig bereits abgesenkt ist. Die zu veranschlagende Motorleistung kann somit gegenüber den bekannten Antrieben mit gesteuerter Motordrehzahl abgesenkt werden, wodurch Kosten und Energie gespart werden können. Ein weiterer Vorteil der Erfindung liegt darin, dass durch die getriebeseitige Variation der Arbeitsgeschwindigkeit während eines Zyklus' erforderliche Abbrems- und Beschleunigungsvorgänge seitens des Antriebsmotors vermieden oder zumindest vermindert werden können und daher die Anforderung an die Dynamik der Motoren bzw. deren Leistung und somit der Energieverbrauch auch aus diesem Grund abgesenkt werden kann.

Vorteilhafte Weiterbildungen der erfindungsgemäßen Vorrichtung finden sich in den Unteransprüchen.

Im Folgenden wird die Erfindung anhand eines Ausführungsbeispiels unter Zuhilfenahme der Figuren näher erläutert, von denen
- Fig. 1: einzelne Arbeitstakte eines Verschließvorgangs eines Ausführungsbeispiels der erfindungsgemäßen Vorrichtung im Verhältnis zur Abtriebsgeschwindigkeit zeigt,
- Fig. 2: eine schematische Darstellung eines ersten Beispiels für ein periodisch ungleichförmig übersetzenden Getriebes zeigt und
- Fig. 3: eine schematische Darstellung eines zweiten Beispiels für ein periodisch ungleichförmig übersetzenden Getriebes zeigt.

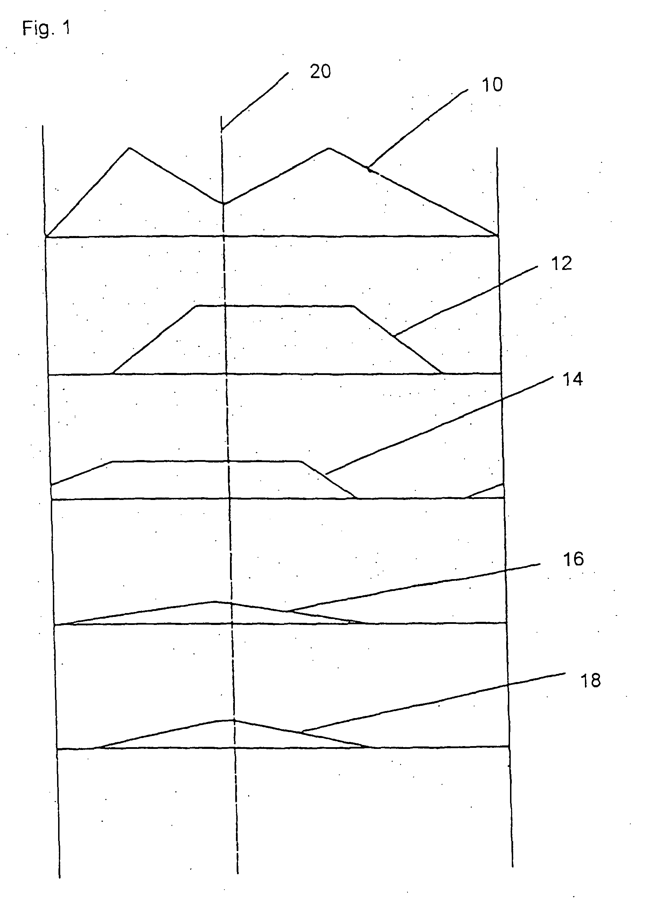

Die obere Kurve 10 aus Fig. 1 zeigt einen beispielhaften schematischen Verlauf der Abtriebsgeschwindigkeit oder -drehzahl in Abhängigkeit vom Drehwinkel der Abtriebswelle des Getriebes. Der gezeigte Geschwindigkeitsverlauf überdeckt eine volle Umdrehung der Abtriebswelle und wiederholt sich danach periodisch. In diesem Ausführungsbeispiel ergibt sich der Geschwindigkeitsverlauf einerseits aus der erfindungsgemäßen Verwendung eines ungleichförmig übersetzenden Getriebes, dessen Übersetzung andererseits überlagert ist mit einer nach einem vorausgewählten Steuerprogramm geregelten Antriebsgeschwindigkeit.

Wird als ungleichförmig übersetzendes Getriebe beispielsweise ein Zahnriemenantrieb mit einem elliptischen Antriebszahnrad verwendet, so schwankt der Drehzahlverlauf der Abtriebswelle näherungsweise sinusförmig. Diese Schwankung kann wie in dem gezeigten Verlauf der Kurve 10 phasenweise gedehnt und phasenweise gestaucht werden, so dass sich über eine volle Umdrehung ein asymmetrischer Verlauf der Antriebsgeschwindigkeit ergibt. Eine Stauchung bzw. Dehnung der einzelnen Phasen kann beispielsweise der Dauer des Füllvorgangs oder anderen Anforderungen angepasst werden. Ferner kann die Amplitude der Abtriebsdrehzahl stellenweise durch eine Anhebung und/oder Absenkung der Motordrehzahl kompensiert und an anderer Stelle noch verstärkt werden. Hierdurch kann eine noch genauere Anpassung des Lieferzyklus' des Antriebs auf den Abnahmezyklus erzielt werden, wobei die Vorteile der erfindungsgemäßen Vorrichtung (zumindest phasenweise) weiterhin genutzt werden. Denn obgleich eine zusätzliche Regelung der Antriebsgeschwindigkeit manchmal gefordert sein kann, bewirkt der Einsatz eines ungleichförmigen Getriebes, dass der Regelungseingriff nicht so stark sein muss und dass in Takten mit langsamer Arbeitsgeschwindigkeit ein erhöhtes Drehmoment zur Verfügung steht.

Die Abtriebsgeschwindigkeit überlagert sich zusätzlich mit den unter der Kurve 10 abgebildeten Steuerkurven der Kurvenscheiben zu einer gewünschten Bewegung der Mittel zum Einschnüren der Verpackungshülle und Bilden eines füllgutfreien Zopfabschnitts sowie der Verschlussmittel. Kurve 12 zeigt einen typischen Verlauf der Auslenkung von Verdrängerscherenpaaren als Mittel zum Einschüren der Verpackungshülle. Diese bewegen sich in radialer Richtung bezüglich der Achse einer zu verschließenden Wurst zum Zweck des Verdrängens des Füllgutes. Bei einer Drehung der Abtriebswelle um 45° beginnt der Verdrängungsprozess und endet nach weiteren 80°. Danach erst setzt der Spreizvorgang ein, Kurve 14. Dabei werden im Verlaufe einer Drehung der Abtriebswelle um weitere 45° die Verdrängerscherenpaare in axialer Richtung bezüglich der Wurst auseinandergeschoben und so das Wurstbrät aus einem zu verschließenden Bereich der Hülle verdrängt, während die Einschnürung der Verdrängerscheren beibehalten wird. Etwa gleichzeitig mit dem Spreizen der Verdrängerscherenpaare setzt eine Radialbewegung oberer und unterer Cliphebel ein, Kurven 16, 18. Bei dem dargestellten Ausführungsbeispiel schwenkt in diesem Arbeitstakt der untere Cliphebel mit einer Matrize unter den füllgutfreien Zopfabschnitt, während sich gleichzeitig der obere Cliphebel mit einem Stempel - die Cliphebel, die Matrize und der Stempel sind Teile der Verschlussmittel - in entgegengesetzter Richtung von oben auf die Matrize zubewegt. Erst nachdem der Spreizvorgang schon beendet, ein füllgutfreien Zopfabschnitt zwischen den Verdrängerscherenpaaren also gebildet ist, erreicht der untere Cliphebel mit der Matrize den Punkt maximaler Annäherung an die Zentrumsachse der Wursthülle. An diesem Punkt beginnt der Verschluss- oder Clipvorgang, Markierung 20. Während der untere Cliphebel noch in dem Punkt maximaler Annäherung verharrt nähert sich der obere Cliphebel mit dem Stempel weiterhin dem Zentrum. Dabei wird die Verschlussklammer umgeformt, bis sie einen fest sitzenden Verschluss um den Zopfabschnitt der Schlauchhülle bildet. Die Übersetzung des Zahnriemengetriebes ist in diesem Arbeitstakt kurz gewählt, wie das lokale Minimum in der Kurve 10 zeigt. Hierdurch wird eine minimale Abtriebsgeschwindigkeit zu Beginn des Clipvorgangs bewirkt und zugleich das Drehmoment an der Abtriebswelle während des Umformungs- oder Clipvorgangs erhöht.

Nach Abschluss des Clipvorgangs öffnen sich der obere und der untere Cliphebel und geben die gesetzte Verschlussklammer frei. Fast gleichzeitig öffnen sich die Verdrängerscherenpaare in radialer Richtung. Dabei wird nur ein geringes Drehmoment an der Abtriebsachse benötigt. Für diesen Arbeitstakt kann folglich eine lange Getriebeübersetzung gewählt werden. Zuletzt werden die Verdrängerscherenpaare in axialer Richtung in ihre Ursprungsstellung zurückgefahren und ein voller Arbeitszyklus ist beendet. Die Übersetzungsverhältnisse können beispielsweise durch eine entsprechende Anpassung der Exzentrizität der Zahnräder und/oder der Längenverhältnissen zwischen den Hauptachsen der Ellipse verändert werden. Das Drehmomentsmaximum bzw. das Geschwindigkeitsminimum der Kurve 10 kann ferner durch einen Phasenversatz mit jedem gewünschten Arbeitstakt zur Deckung gebracht werden, was die Einsatzmöglichkeit der erfindungsgemäßen Vorrichtung zum Verschließen einer mit unterschiedlichstem Füllgut befüllten Verpackungshülle ermöglicht.

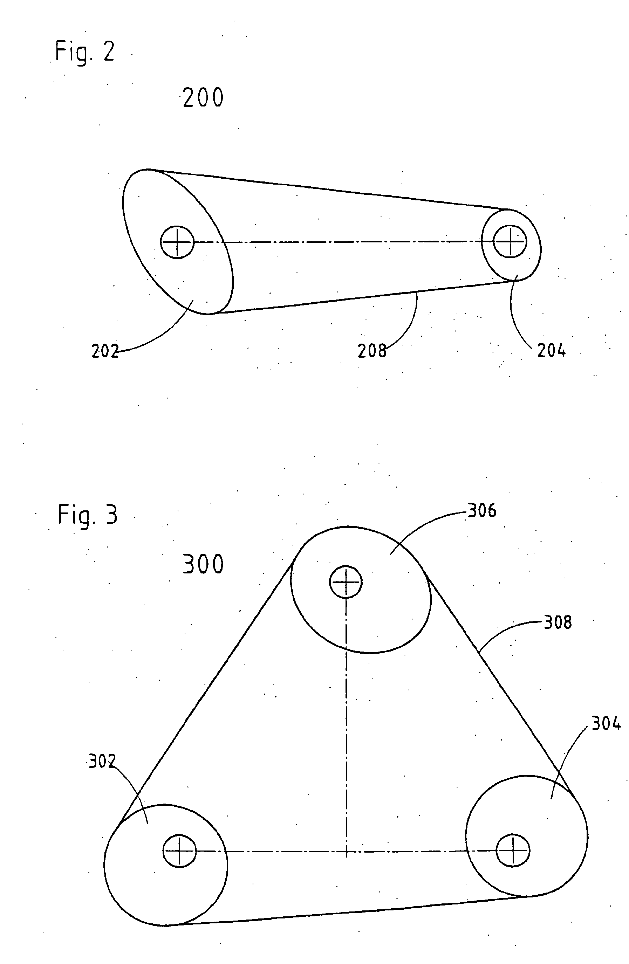

Das periodisch ungleichförmig übersetzende Getriebe gemäß Fig. 2 ist ein Zahnriemengetriebe 200 mit einem ersten elliptischen Zahnrad 202 und einem zweiten elliptischen Zahnrad 204. Die beiden Zahnräder 202, 204 sind über einem Zahnriemen 208 gekoppelt. Das erste Zahnrad 202 weist eine stärkere Ellipsenform als das zweite auf und sorgt für die ungleichförmige Übersetzung. Die Ellipsenform des zweiten Zahnrades dient im Wesentlichen nur dem Längenausgleich.

Ein anderes Beispiel eines periodisch ungleichförmig übersetzenden Getriebes ist in Fig. 3 gezeigt. Es handelt dabei um ein Zahnriemengetriebe 300 mit drei über einen Zahnriemen 308 gekoppelten Zahnrädern 302, 304 und 306, die exzentrisch gelagert sind. Zwei davon, 302 und 304, sind rund und dienen dem An- und Abtrieb, das dritte 306 ist eine Ausgleichsrad für den Längenausgleich.

Die gezeigten Getriebe, übersetzen jeweils eine gleichförmige Antriebsbewegung, d.h. eine konstante Antriebsdrehzahl, in eine periodisch ungleichförmige Abtriebsbewegung. Die Antriebs- und Abtriebsseite ist bei den gezeigten Getrieben nicht festgelegt. Die Periodizität kann sich bei symmetrischen Anordnungen wie der aus Fig. 2 verdoppeln.

Anstelle der Zahnriemengetriebe 200, 300 kann jeweils auch ein Kettengetriebe mit derselben Anordnung zum Einsatz kommen. Auch andere Anordnungen sind denkbar: Beispielsweise lässt sich ein anderes Übersetzungsverhalten auch durch ein elliptisches und zugleich exzentrisch gelagertes Zahnrad in Kombination mit mehreren phasenversetzt exzentrisch gelagerte Zahnräder erzielen. Anstelle eine Zahnriemen- oder Kettengetriebes kann auch ein ungleichförmig übersetzendes Zahnradgetriebe zum Einsatz kommen.

Schließlich lassen sich auch mehrere der genannten Getriebeformen durch Hintereinanderschalten kombinieren.

## Patentansprüche

1. Vorrichtung zum Verschließen einer mit Füllgut, insbesondere Wurstbrät, gefüllten schlauch- oder beutelartigen Verpackungshülle, mit Mitteln zum Einschnüren der Verpackungshülle und Bilden eines füllgutfreien Zopfabschnitts, mit Verschlussmitteln zum Setzen und Verschließen wenigstens einer Verschlussklammer um den Zopfabschnitt und mit einem Antrieb für die Mittel zum Einschnüren und für die Verschlussmittel,
**dadurch gekennzeichnet, dass** der Antrieb ein ungleichförmig übersetzendes Getriebe aufweist, das eine gleichförmige Antriebsbewegung in eine periodische, ungleichförmige Abtriebsbewegung übersetzt, wobei die Übersetzung des Getriebes derart ausgestaltet ist, dass die Abtriebsgeschwindigkeit beim Setzen der Verschlussmittel gegenüber der Abtriebsgeschwindigkeit beim Einschnüren und Verdrängen verringert ist, und wobei das Getriebe ein Zahnriemengetriebe oder ein Kettengetriebe mit wenigstens einem elliptischen Zahnrad oder mit wenigstens einem Zahnrad ist, das exzentrisch gelagert ist.

2. Vorrichtung zum Verschließen einer mit Füllgut, insbesondere Wurstbrät, gefüllten schlauch- oder beutelartigen Verpackungshülle, mit Mitteln zum Einschnüren der Verpackungshülle und Bilden eines füllgutfreien Zopfabschnitts, mit Verschlussmitteln zum Setzen und Verschließen wenigstens einer Verschlussklammer um den Zopfabschnitt und mit einem Antrieb für die Mittel zum Einschnüren und für die Verschlussmittel,
**dadurch gekennzeichnet, dass** der Antrieb ein ungleichförmig übersetzendes Getriebe aufweist, das eine gleichförmige Antriebsbewegung in eine periodische, ungleichförmige Abtriebsbewegung übersetzt, wobei die Übersetzung des Getriebes derart ausgestaltet ist, dass die Abtriebsgeschwindigkeit beim Einschnüren und Verdrängen gegenüber der Abtriebsgeschwindigkeit beim Setzen der Verschlussmittel verringert ist, und wobei das Getriebe ein Zahnriemengetriebe oder ein Kettengetriebe mit wenigstens einem elliptischen Zahnrad oder mit wenigstens einem Zahnrad ist, das exzentrisch gelagert ist.

3. Vorrichtung nach einem der Ansprüche 1 oder 2,
**dadurch gekennzeichnet, dass** die Antriebsgeschwindigkeit regelbar ist.

## Claims

1. Apparatus for closing a tube-like or bag-like packaging casing filled with filling material, in particular sausage meat, comprising means for constricting the packaging casing and forming a filling material-free plait end portion, closure means for fitting and closing at least one closure clip around the plait end portion and a drive for the constricting means and for the closure means,
**characterized in that** the drive has a non-uniformly transmitting transmission means which converts a uniform drive input movement into a periodic, non-uniform drive output movement, wherein the transmission ratio of the transmission means is such that the drive output speed when fitting the closure means is reduced with respect to the drive output speed in the constriction and displacement operations, and wherein the transmission means is a toothed belt transmission means or a chain transmission means having at least one elliptical gear or at least one gear which is mounted eccentrically.

2. Apparatus for closing a tube-like or bag-like packaging casing filled with filling material, in particular sausage meat, comprising means for constricting the packaging casing and forming a filling material-free plait end portion, closure means for fitting and closing at least one closure clip around the plait end portion and a drive for the constricting means and for the closure means,
**characterized in that** the drive has a non-uniformly transmitting transmission means which converts a uniform drive input movement into a periodic, non-uniform drive output movement, wherein the transmission ratio of the transmission means is such that the drive output speed in the constriction and displacement operations is reduced with respect to the drive output speed when fitting the closure means, and wherein the transmission means is a toothed belt transmission means or a chain transmission means having at least one elliptical gear or at least one gear which is mounted eccentrically.

3. Apparatus according to one of claims 1 and 2 **characterized in that** the drive speed is regulatable.

## Revendications

1. Dispositif pour fermer une enveloppe d'emballage sous forme de tube ou de sachet rempli de farce, en particulier de chair à saucisse, comportant des moyens pour serrer l'enveloppe d'emballage et pour former une portion tressée sans farce, des moyens de fermeture pour poser et fermer au moins une agrafe de fermeture autour de la portion tressée et un entraînement pour les moyens de serrage et les moyens de fermeture,
**caractérisé en ce que** l'entraînement comporte un mécanisme à rapport de transmission variable, qui transforme un mouvement régulier d'entraînement en un mouvement non uniforme et périodique de l'entraînement de sortie, la multiplication du mécanisme de transmission étant telle que la vitesse de sortie lorsqu'on pose les moyens de fermeture est réduite par rapport à la vitesse de sortie lors du serrage et de la poussée et le mécanisme de transmission étant un engrenage à courroie dentée ou un engrenage à chaîne muni d'au moins une roue dentée elliptique ou d'au moins une roue dentée montée excentriquement.

2. Dispositif pour fermer une enveloppe d'emballage sous forme de tube ou de sachet rempli de farce, en particulier de chair à saucisse, comportant des moyens pour serrer l'enveloppe d'emballage et pour former une portion tressée sans farce, des moyens de fermeture pour poser et fermer au moins une agrafe de fermeture autour de la portion tressée et un entraînement pour les moyens de serrage et les moyens de fermeture,
**caractérisé en ce que** l'entraînement comporte un mécanisme à rapport de transmission variable qui transforme un mouvement régulier d'entraînement en un mouvement non uniforme et périodique de l'entraînement de sortie, la multiplication du mécanisme de transmission étant telle que la vitesse de sortie lors du serrage et de la poussée est réduite par rapport à la vitesse de sortie lorsqu'on pose les moyens de fermeture et le mécanisme de transmission étant un engrenage à courroie dentée ou un engrenage à chaîne muni d'au moins une roue dentée elliptique ou d'au moins une roue dentée montée excentriquement.

3. Dispositif selon l'une des revendications 1 ou 2, **caractérisé en ce que** la vitesse d'entraînement est réglable.
